# EUROPÄISCHE PATENTANMELDUNG

(11) **EP 1 146 364 A2**
(43) Veröffentlichungstag der Anmeldung: **17.10.2001**
(21) Anmeldenummer: 01103380.0
(22) Anmeldetag: 13.02.2001
(51) Int. Cl.: G02B 6/36

(54) **Vorrichtung zur Einkopplung eines Laserstrahls in eine Glasfaser**

(30) Priorität: 15.02.2000 DE 10006614
(71) Anmelder: TuiLaser AG, 82110 Germering (DE)
(72) Erfinder: Kodeda, Hans, 84036 Landshut (DE); Krattemacher, Susanne, 81373 München (DE)
(74) Vertreter: Hofstetter, Alfons J., Dr.rer.nat.

(57) **Zusammenfassung**

Die vorliegende Erfindung betrifft eine Kopplungsvorrichtung zur Einkopplung eines Laserstrahls 66 in mindestens eine optische Faser 12, insbesondere einen Lichtwellenleiter, mit einer Faserkupplung 18 zur Aufnahme der Faser 12 und einer optischen Vorrichtung 94 zur Ablenkung und Justierung des Laserstrahls 66 auf ein Ende 14 der Faser 12, wobei die Faserkupplung 18 innerhalb der Kopplungsvorrichtung 10 in x-y-Richtung höhen- und seitenverschiebbar angeordnet ist und die optische Vorrichtung 94 eine optische Bank 96 mit mindestens zwei optischen Komponenten 58, 62 aufweist, wobei die optische Bank 96 mit der Faserkupplung 18 über ein an dem dem Eintritt des Laserstrahls 66 gegenüberliegenden Ende der optischen Bank 96 angeordnetes Kupplungselement 32 verbunden ist.

## Beschreibung

Die vorliegende Erfindung bezieht sich auf eine Kopplungsvorrichtung zur Einkopplung eines Laserstrahls in mindestens eine optische Faser, insbesondere einen Lichtwellenleiter, mit einer Faserkupplung zur Aufnahme der Faser und einer optischen Vorrichtung zur Ablenkung und Justierung des Laserstrahls auf ein Ende der Faser.

Derartige Kopplungsvorrichtungen sind bekannt. Sie dienen insbesondere dazu, einen Laserstrahl mit einem relativ großen Durchmesser in eine optische Faser mit geringerem Durchmesser überzuleiten, ohne daß es zu größeren Energieverlusten kommt. Um dies zu vermeiden, sind die entsprechenden Enden der optischen Fasern plangeschliffen. Allerdings bleiben durch diesen Schleifvorgang immer gewisse Unreinheiten und kleine Kratzer an der Oberfläche dieses Endes der optischen Faser, was zu einer Absorbierung der Laserenergie führt. Es ist daher unbedingt notwendig, den Laserstrahl optimal auf die Oberfläche der optischen Faser zu fokussieren.

In der US 4,732,448 ist eine Kopplungsvorrichtung beschrieben, bei der das Ende der optischen Faser, in welche das Laserlicht eingeleitet werden soll, als halbsphärische Linse ausgebildet ist. Diese Linse kann allerdings auch separat vor dem Faserende angeordnet sein. Von dieser ersten Linse beabstandet ist eine zweite Linse angeordnet, die den eingehenden Laserstrahl auf einen bestimmten Brennpunkt fokussiert. Der Abstand zwischen der ersten und der zweiten Linse ist dabei größer als die Brennweite der zweiten Linse. Dadurch scheint das fokussierte Laserlicht von einer punktförmigen Quelle zu kommen und tritt über die erste Linse in die Faser ein.

Auch andere gattungsgemäße Kopplungsvorrichtungen sind bekannt. Diese weisen jedoch eine Vielzahl von optischen Komponenten auf, die einerseits schwer zu warten sind, und andererseits schwer zu justieren sind. Durch die auftretende Dejustierung, insbesondere auch durch Temperaturunterschiede oder eine Verschmutzung der optischen Komponenten, werden diese im Betrieb blind, wodurch die Verluste an Laserenergie wachsen. Dies kann bis zur Zerstörung der optischen Faser bzw. des Faserendes führen.

Es ist daher Aufgabe der vorliegenden Erfindung, eine gattungsgemäße Kopplungsvorrichtung bereitzustellen, welche die Anzahl an optischen Komponenten minimiert und eine einfache Justierung des Laserstrahls, unter Vermeidung von Energieverlusten, erlaubt.

Gelöst wird diese Aufgabe durch eine gattungsgemäße Kopplungsvorrichtung mit den Merkmalen des Anspruches 1.

Vorteilhafte Ausgestaltungen sind in den Unteransprüchen beschrieben.

Bei einer erfindungsgemäßen Kopplungsvorrichtung zur Einkopplung eines Laserstrahls in mindestens eine optische Faser ist eine Faserkupplung innerhalb der Kopplungsvorrichtung in x-y-Richtung höhen- und seitenverschiebbar angeordnet, und eine optische Vorrichtung weist eine optische Bank mit mindestens zwei optischen Komponenten auf, wobei die optische Bank mit der Faserkupplung über ein an dem dem Eintritt des Laserstrahls gegenüberliegenden Ende der optischen Bank angeordnetes Kupplungselement verbunden ist. Durch die Höhen- und Seitenverschiebbarkeit der Faserkupplung, und damit der optischen Faser innerhalb der Kopplungsvorrichtung, und des ebenfalls erfolgenden entsprechenden Verschubs der optischen Bank, ist es jederzeit möglich, den eingehenden Laserstrahl auf das entsprechende Ende beziehungsweise die Oberfläche der optischen Faser zu fokussieren. Da die optischen Komponenten auf der optischen Bank angeordnet sind, kommt es, insbesondere bei Temperaturschwankungen, zu keiner Defokussierung, da sich die Längenänderung der optischen Bank auf die angeordneten optischen Komponenten gleichmäßig auswirkt. Entsprechend den Anforderungen kann die optische Bank dabei verschiedenartigste optische Komponenten aufweisen. Andererseits ist es möglich, die Anzahl der optischen Komponenten jederzeit zu verringern.

In einer vorteilhaften Ausgestaltung der erfindungsgemäßen Kopplungsvorrichtung ist die Faserkupplung in einer Ausnehmung des Kupplungselementes angeordnet und mittels eines oder mehrerer Befestigungsmittel mit diesem fest verbunden. Dadurch ist gewährleistet, daß es zu einer identischen Höhen- oder Seitenverschiebung der Faserkupplung mit der optischen Faser und des Kupplungselementes der optischen Vorrichtung beziehungsweise der optischen Bank kommt.

In einer weiteren vorteilhaften Ausgestaltung der erfindungsgemäßen Kopplungsvorrichtung ist die optische Faser in einem Faserstecker angeordnet. Der die optische Faser umgebende Faserstecker schützt einerseits die optische Faser vor Verunreinigungen und Beschädigungen, und erlaubt es in einfacher Art und Weise, die optische Faser in die Kopplungsvorrichtung, insbesondere in die Faserkupplung, einzuführen.

In einer weiteren vorteilhaften Ausgestaltung der Erfindung weist die Kopplungsvorrichtung eine Frontplatte auf, wobei das Kupplungselement in einer Ausnehmung der Frontplatte zu liegen kommt und die Fläche der Ausnehmung größer ist als die Fläche des Kupplungselementes, so daß mit Hilfe von mindestens zwei Gewindestiften, die in entsprechenden, mit jeweils einem Innengewinde versehenen Ausnehmungen angeordnet sind, und mit dem Kupplungselement in Berührung stehen, eine Verschiebung und Positionierung des Kupplungselementes und der Faserkupplung in x-y-Richtung möglich ist. Durch ein entsprechendes Verdrehen der Gewindestifte ist es auf einfache Art und Weise möglich, das Kupplungselement und die Faserkupplung zu positionieren, und damit eine optimale Fokussierung des eingehenden Laserstrahls auf das Faserende der optischen Faser zu gewährleisten.

In einer weiteren vorteilhaften Ausgestaltung der Erfindung weist die Frontplatte an den den Gewindestiften gegenüberliegenden Seiten entsprechende Ausnehmungen zur Aufnahme von Druckfedern auf. Dadurch ist gewährleistet, daß bei einer Neu-Fokussierung das Kupplungselement und die Faserkupplung automatisch entsprechende Ausgangspositionen einnehmen können.

In einer weiteren vorteilhaften Ausgestaltung der erfindungsgemäßen Kopplungsvorrichtung ist eine Kupplungsplatte mittels mindestens eines Befestigungsmittels mit dem Kupplungselement lösbar verbunden, derart, daß sie im Bereich der Frontplatte zwischen der Kupplungsplatte und dem Kupplungselement zu liegen kommt. Dadurch ist es möglich, daß nach der Justierung der optischen Vorrichtung beziehungsweise des Kupplungselementes und der Faserkupplung die Kupplungsplatte und das Kupplungselement durch das Befestigungsmittel mit der Frontplatte fest verbunden werden können, so daß die genannten Elemente an der Frontplatte fixiert sind. Die Justierung ist damit nicht mehr unbeabsichtigt veränderbar. Um einen entsprechenden Strahlengang zu gewährleisten, ragt die Faserkupplung in eine Öffnung der Kupplungsplatte hinein.

In einer weiteren vorteilhaften Ausgestaltung der Erfindung ist an der Kupplungsplatte ein Käfig für eine Shutter-Scheibe angeordnet. Der Käfig weist dabei eine zur Öffnung der Kupplungsplatte achsparallele Öffnung auf. Die durch Schwerkraft betätigte Shutter-Scheibe verschließt die genannten Öffnungen für den Fall, daß keine optische Faser beziehungsweise kein Faserstecker in die Kopplungsvorrichtung eingeführt ist. Dadurch wird verhindert, daß ein Laserstrahl aus der Einkopplungsvorrichtung unkontrolliert austreten kann, ohne daß eine entsprechende optische Faser eingeführt ist.

In einer weiteren vorteilhaften Ausgestaltung der erfindungsgemäßen Kopplungsvorrichtung weist die optische Bank stift- oder schienenartige Elemente zur Aufnahme der optischen Komponenten mittels entsprechender Haltevorrichtungen auf. Dabei ist mindestens eine optische Komponente verschiebbar angeordnet. Durch die Längsverschiebbarkeit einer optischen Komponente, nämlich einer Linse, kann eine Fein-Justierung des Brennpunkts des eingehenden Laserstrahls erfolgen. Temperaturschwankungen haben keine Auswirkungen auf die Justierung, da die stift- oder schienenartigen Elemente vorzugsweise aus Stahl bestehen, und somit deren Ausdehnungskoeffizient vernachlässigbar klein ist.

In einer weiteren vorteilhaften Ausgestaltung der Erfindung sind die Elemente der Kopplungsvorrichtung als Modul ausgebildet. Eine derartige Modulbauweise gewährleistet einen einfachen Aufbau und auch einen entsprechend einfachen Austausch einzelner Elemente oder des gesamten Moduls.

Weitere Aufgaben, Vorteile und Merkmale der vorliegenden Erfindung ergeben sich aus den folgenden, in den Zeichnungen dargestellten Ausführungsbeispielen.
- Figur 1: ist eine vereinfachte Frontalansicht der erfindungsgemäßen Kopplungsvorrichtung;
- Figur 2: zeigt eine vereinfacht dargestellte Schnittansicht entlang der Linie A - A gemäß Figur 1; und
- Figur 3: zeigt eine vereinfacht dargestellte Schnittansicht entlang der Linie B - B gemäß Figur 1.

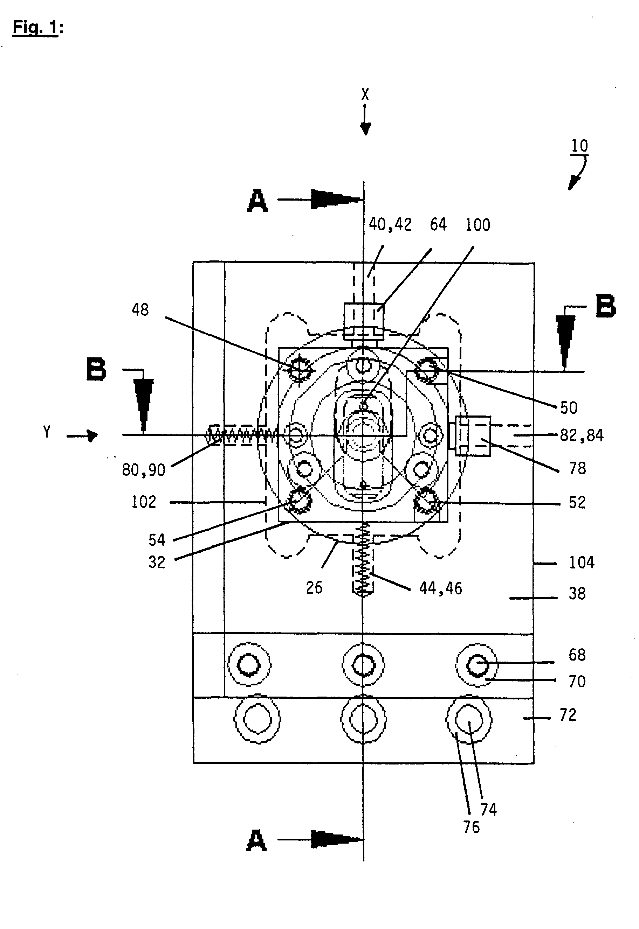

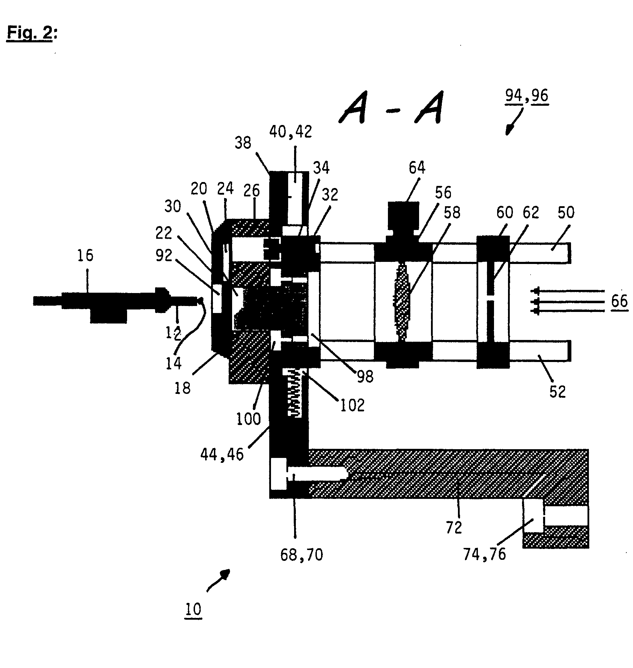

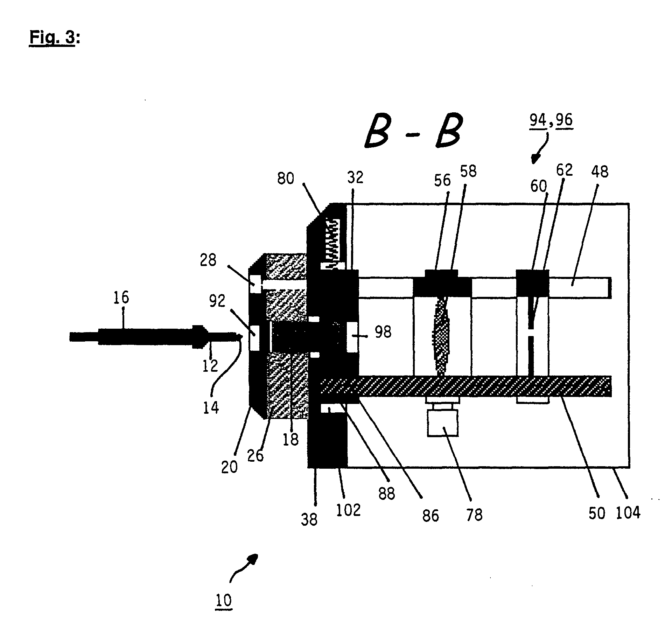

Die Figur 1 zeigt in einer vereinfachten Frontalansicht eine Kopplungsvorrichtung 10 zur Einkopplung eines Laserstrahls in eine optische Faser 12, insbesondere einen Lichtwellenleiter (vgl. Figuren 2 und 3). Man erkennt, daß die Kopplungsvorrichtung 10 ein Gehäuse 104 mit einer Frontplatte 38 aufweist. An die Frontplatte 38 schließt sich ein Winkelelement 72 an, welches mit der Frontplatte 38 über Befestigungsmittel 68, die in Ausnehmungen 70 angeordnet sind, verbunden ist. Über Befestigungsmittel 74, die in Ausnehmungen 76 des Winkelelementes 72 angeordnet sind, ist die Kopplungsvorrichtung 10 zum Beispiel an einem Gehäuse einer Laserquelle befestigbar.

Die Kopplungsvorrichtung 10 dient insbesondere zur Einkopplung von gepulster Laserstrahlung eines Excimer-Lasers bei ca. 10mJ Energieinhalt pro Puls und einer Pulsdauer von 50 bis 80 ns. Dabei wird die Leistung des Laserstrahls typischerweise von 1 MW auf ca. 100 kW reduziert.

Des weiteren erkennt man aus Figur 1, daß die Frontplatte 38 eine Ausnehmung 102 aufweist, in der ein Kupplungselement 32 angeordnet ist. Die Fläche der Ausnehmung 102 ist dabei größer als die Fläche des Kupplungselementes 32. Des weiteren weist die Frontplatte 38 zwei mit einem Innengewinde versehene Ausnehmungen 42, 84 auf, wobei in den Ausnehmungen 42, 84 jeweils ein Gewindestift 40, 82 geführt ist. Die Gewindestifte 40, 82 stehen mit dem Kupplungselement 32 in Berührung, so daß eine Verschiebung und Positionierung des Kupplungselementes 32 und einer Faserkupplung 18, die in einer Ausnehmung 98 des Kupplungselementes 32 angeordnet ist und mittels zweier Befestigungsmittel 100 mit diesen fest verbunden ist, in x-y-Richtung möglich ist. Eine Verschiebung in x-y-Richtung bedeutet eine Höhen- und Seitenverschiebbarkeit der genannten Elemente.

An den den Gewindestiften 40, 82 gegenüberliegenden Seiten weist die Frontplatte 38 entsprechende Ausnehmungen 46, 90 zur Aufnahme einer ersten und zweiten Druckfeder 44, 80 auf. Die Federn 44, 80 können jeweils von einer Hülse (nicht dargestellt) umgeben sein. Diese Hülse schützt die Druckfedern 44, 80 gegen seitliches Verbiegen. Des weiteren wird die Justierung insgesamt vereinfacht.

Schließlich erkennt man aus Figur 1, daß jeweils eine Betätigungsvorrichtung 64, 78 in x- beziehungsweise y-Richtung angeordnet ist. Nähere Einzelheiten des Ausführungsbeispieles sind in den Figuren 2 und 3 dargestellt, die im folgenden beschrieben werden.

So zeigt Figur 2 eine vereinfacht dargestellte Schnittansicht entlang der Linie A - A gemäß Figur 1. Figur 2 zeigt die Kopplungsvorrichtung 10 mit einer Faserkupplung 18 zur Aufnahme der Faser 12 und einer optischen Vorrichtung 94 zur Ablenkung und Justierung eines Laserstrahls 66 auf ein Ende 14 der Faser 12. Man erkennt, daß die Faserkupplung 18 innerhalb der Kopplungsvorrichtung 10 in x-y-Richtung höhen- und seitenverschiebbar ist. Die optische Vorrichtung 94 ist als optische Bank 96 aufgebaut und weist in dem Ausführungsbeispiel zwei optische Komponenten 58, 62 auf, wobei die optische Komponente 58 eine Linse und die optische Komponente 62 eine Blende ist. Zudem weist die optische Bank 96 stift- oder schienenartige Elemente 48, 50, 52, 54 (vgl. auch Figur 1) zur Aufnahme der optischen Komponenten 58, 62 mittels entsprechender Haltevorrichtungen 56, 60 auf. Die erste optische Komponente 58, nämlich eine Linse, ist dabei entlang der stift- oder schienenartigen Elemente 48, 50, 52, 54 verschiebbar angeordnet. Eine Verschiebung der ersten optischen Komponente 56 erfolgt durch die Betätigung der Betätigungselemente 64, 78. Die zweite optische Komponente 62, nämlich die Blende, ist im Ausführungsbeispiel ortsfest angeordnet. Man erkennt, daß der Laserstrahl 66 zuerst auf die Blende 62 und dann auf die Linse 58 trifft.

Die optische Bank 96 ist mit der Faserkupplung 18 über das an dem dem Eintritt des Laserstrahls 66 gegenüberliegenden Ende der optischen Bank angeordnete Kupplungselement 32 verbunden. Hierzu dienen die Befestigungsmittel 100.

Des weiteren erkennt man, daß eine Kupplungsplatte 26 mittels mehrerer Befestigungsmittel 34 mit dem Kupplungselement 32 lösbar verbunden ist. Dabei kommt ein Bereich der Frontplatte 38 zwischen der Kupplungsplatte 26 und dem Kupplungselement 32 zu liegen. Durch Festziehen der Befestigungsmittel 34, insbesondere von Schrauben 34, werden die Kupplungsplatte 26 und das Kupplungselement 32 an der Frontplatte 38 fixiert. Es wird ersichtlich, daß dabei die Faserkupplung 18 in eine Öffnung 30 der Kupplungsplatte 26 hineinragt.

An der Kupplungsplatte 26 ist ein Käfig 20 für eine Shutter-Scheibe 22 angeordnet. Der Käfig 20 weist dabei eine zur Öffnung 30 der Kupplungsplatte 26 achsparallele Öffnung 92 auf. Zudem ist im Käfig 20 eine Ausnehmung 24 zur Aufnahme der Shutter-Scheibe 22 ausgebildet. Die Shutter-Scheibe 22 tritt in die Ausnehmung 24 in dem Fall, in dem die optische Faser 12, die im vorliegenden Ausführungsbeispiel in einem Faserstecker 16 angeordnet ist, in die Faserkupplung 18 eingeführt wird. Ist dies nicht der Fall, so verschließt die Shutter-Scheibe 22 die Öffnung 92, so daß es zu keinem unkontrollierten Austritt von Laserlicht aus der Kopplungsvorrichtung 10 kommen kann.

In Figur 2 erkennt man deutlich den in x-Richtung angeordneten Gewindestift 40 in der Ausnehmung 42 und die korrespondierende erste Druckfeder 44, die in der Ausnehmung 46 angeordnet ist und einen entsprechenden Gegendruck zum Gewindestift 40 ausübt.

Schließlich erkennt man noch die Anordnung des Winkelelementes 72 mit den entsprechenden Befestigungsmitteln und Ausnehmungen für die Befestigungsmittel 68, 70, 74, 76.

Figur 3 zeigt eine vereinfacht dargestellte Schnittansicht entlang der Linie B - B gemäß Figur 1. Dieser Schnitt führt ungefähr senkrecht zu dem Schnitt entlang der Linie A - A. Man erkennt hier zusätzlich die Befestigung des Käfigs 20 über die Befestigungsmittel 28 an der Kupplungsplatte 26. Des weiteren ist die in y-Richtung ausgerichtete zweite Druckfeder 80 dargestellt.

Man erkennt, daß das Kupplungselement 32 Öffnungen 88 zur Aufnahme der Enden 86 der stift- oder schienenartigen Elemente 48, 50, 52, 54 aufweist.

Aus den Figuren 2 und 3 wird deutlich, daß die Elemente der Kopplungsvorrichtung 10 als Modul ausgebildet sind.

Die optische Faser 12 kann nicht nur aus einem einzelnen Lichtwellenleiter, sondern auch aus einem Faserbündel oder jeder anderen, geeigneten Konfiguration zur Übertragung von Laserlicht und -energie bestehen.

## Patentansprüche

1. Kopplungsvorrichtung zur Einkopplung eines Laserstrahls (66) in mindestens eine optische Faser (12), insbesondere einen Lichtwellenleiter, mit einer Faserkupplung (18) zur Aufnahme der Faser (12) und einer optischen Vorrichtung (94) zur Ablenkung und Justierung des Laserstrahls (66) auf ein Ende (14) der Faser (12),
**dadurch gekennzeichnet,**
**daß** die Faserkupplung (18) innerhalb der Kopplungsvorrichtung (10) in x-y-Richtung höhen- und seitenverschiebbar angeordnet ist und die optische Vorrichtung (94) eine optische Bank (96) mit mindestens zwei optischen Komponenten (58, 62) aufweist, wobei die optische Bank (96) mit der Faserkupplung (18) über ein an dem dem Eintritt des Laserstrahls (66) gegenüberliegenden Ende der optischen Bank (96) angeordnetes Kupplungselement (32) verbunden ist.

2. Kopplungsvorrichtung nach Anspruch 1,
**dadurch gekennzeichnet,**
**daß** die Faserkupplung (18) in einer Ausnehmung (98) des Kupplungselements (32) angeordnet ist und mittels eines oder mehrerer Befestigungsmittel (100) mit diesem fest verbunden ist.

3. Kopplungsvorrichtung nach Anspruch 1 oder 2,
**dadurch gekennzeichnet,**
**daß** die optische Faser (12) in einem Faserstecker (16) angeordnet ist.

4. Kopplungsvorrichtung nach einem der vorhergehenden Ansprüche,
**dadurch gekennzeichnet,**
**daß** die Kopplungsvorrichtung (10) eine Frontplatte (38) aufweist, wobei das Kupplungselement (32) in einer Ausnehmung (102) der Frontplatte (38) zu liegen kommt und die Fläche der Ausnehmung (102) größer ist als die Fläche des Kupplungselements (32), so daß mit Hilfe von mindestens zwei Gewindestiften (40, 82), die in entsprechenden, mit jeweils einem Innengewinde versehenen Ausnehmungen (42, 84) angeordnet sind und mit dem Kupplungselement (32) in Berührung stehen, eine Verschiebung und Positionierung des Kupplungselements (32) und der Faserkupplung (18) in x-y-Richtung möglich ist.

5. Kopplungsvorrichtung nach Anspruch 4,
**dadurch gekennzeichnet,**
**daß** die Frontplatte (38) an den den Gewindestiften (40, 82) gegenüberliegenden Seiten entsprechende Ausnehmungen (46, 90) zur Aufnahme von Druckfedern (44, 80) aufweist.

6. Kopplungsvorrichtung nach einem der vorhergehenden Ansprüche,
**dadurch gekennzeichnet,**
**daß** eine Kupplungsplatte (26) mittels mindestens eines Befestigungsmittels (34) mit dem Kupplungselement (32) lösbar verbunden ist, derart, daß ein Bereich der Frontplatte (38) zwischen der Kupplungsplatte (26) und dem Kupplungselement (32) zu liegen kommt.

7. Kopplungsvorrichtung nach Anspruch 6,
**dadurch gekennzeichnet,**
**daß** die Faserkupplung (18) in eine Öffnung (30) der Kupplungsplatte (26) hineinragt.

8. Kopplungsvorrichtung nach einem der vorhergehenden Ansprüche,
**dadurch gekennzeichnet,**
**daß** an der Kupplungsplatte (26) ein Käfig (20) für eine Shutter-Scheibe (22) angeordnet ist.

9. Kopplungsvorrichtung nach Anspruch 8,
**dadurch gekennzeichnet,**
**daß** der Käfig (20) eine zur Öffnung (30) der Kupplungsplatte (26) achsparallele Öffnung (92) aufweist.

10. Kopplungsvorrichtung nach einem der vorhergehenden Ansprüche,
**dadurch gekennzeichnet,**
**daß** die optische Bank (96) stift- oder schienenartige Elemente (48, 50, 52, 54) zur Aufnahme der optischen Komponenten (58, 62) mittels entsprechender Haltevorrichtungen (56, 60) aufweist.

11. Kopplungsvorrichtung nach einem der vorhergehenden Ansprüche,
**dadurch gekennzeichnet,**
**daß** mindestens eine optische Komponente (58, 62) verschiebbar angeordnet ist.

12. Kopplungsvorrichtung nach einem der vorhergehenden Ansprüche,
**dadurch gekennzeichnet,**
**daß** mindestens eine optische Komponente (58, 62) eine Linse ist.

13. Kopplungsvorrichtung nach einem der vorhergehenden Ansprüche,
**dadurch gekennzeichnet,**
**daß** die optische Faser (12) aus einem Faserbündel besteht.

14. Kopplungsvorrichtung nach einem der vorhergehenden Ansprüche,
**dadurch gekennzeichnet,**
**daß** die Elemente der Kopplungsvorrichtung (10) als Modul ausgebildet sind.
